# EUROPEAN PATENT SPECIFICATION

(11) **EP 3 343 393 B1**
(45) Date of publication and mention of the grant of the patent: **17.02.2021**
(21) Application number: 16207407.4
(22) Date of filing: 29.12.2016
(51) Int. Cl.: G06F 16/78, H04N 21/434, H04N 21/482

(54) **INFORMATION FILTERING METHOD AND CONTROL DEVICE**
INFORMATIONSFILTRIERUNGSVERFAHREN UND STEUERUNGSVORRICHTUNG
PROCÉDÉ DE FILTRAGE D'INFORMATIONS ET DISPOSITIF DE COMMANDE

(43) Date of publication of application: 04.07.2018
(73) Proprietor: Vestel Elektronik Sanayi ve Ticaret A.S., 45030 Manisa (TR)
(72) Inventor: Inanc, Metin, 45030 Manisa (TR)
(74) Representative: Kehl, Ascherl, Liebhoff & Ettmayr Patentanwälte Partnerschaft mbB

(56) References cited:
- EP-A2- 2 139 230
- US-A- 5 963 935
- US-A1- 2012 209 873
- US-A1- 2014 351 870

## Description

### TECHNICAL FIELD

The invention relates to an information filtering method and a control device.

### BACKGROUND

It is a standard practice to allow Hotel TV users to filter the TV channels they are viewing e.g. based on a country selection. A system that allows such a selection usually uses one bit, the smallest possible memory space, to indicate whether a channel belongs to a specific country. A bit set to one will indicate that the TV channel is associated with the country that the bit represents, while a bit set to zero will carry the opposite meaning.

A single TV channel can be associated with multiple countries. An example would be a French language TV channel that is associated with France, French Speaking Swiss Alps and Belgium. A filtered set on France will return the TV channel above, as will a filtered set on Belgium or Switzerland.

Given that there are currently 192 recognized countries (that number being flexible based on the political situation) 192 bits will be required per TV channel using the known approach. This will lead to a 192 bit indicator vector per TV channel

With this approach as the number of TV channels grows (a common number being in the hundreds) each channel will need 192 bits and as a result there will be significant waste of space as the used memory space will grow in the multiples of 192. Further, not all of the 192 bits will be used as Hotel TVs seldom allow for a selection of more than 20 countries. Given a generous selection of TV channels encompassing 40 different countries, at least 152 bits per TV channel will be wasted. Further, with such a scheme six 32 bit double words of computer memory will have to be processed on the bit level to be able to perform the filtering. This is time consuming, while television sets usually comprise an embedded system that possesses low amounts of memory and little processing power.

Document EP 2 139 230 A2 discloses a method for automatically determining the language of content that is provided via server to match a language that is selected at an initial setup.

Document US 2014 / 0 351 870 A1 discloses a method for indexing online media content into numeric channel numbers and enabling a user device to access such content by entering channel numbers.

Document US 5 963 935 A discloses a method for combining a plurality of bitmap streams.

Document US 2012 / 0 209 873 A1 discloses a method for efficiently solving a set-level query in a database by computing a set comparison within a predicate associated with a GROUP BY using a bit-map index.

### SUMMARY

Accordingly, there is a need for an improved channel management in television sets.

The present invention provides an information filtering method with the features of claim 1 and a control device with the features of claim 6.

The cardinality of the subset will determine the number of markers to be used per information element, e.g. per TV channel. This for example greatly reduces the necessary number of markers, when storing information about TV channels and the country set they pertain to. Now for example only 64 markers are needed to store this information for 64 countries instead of 192 markers, as explained above.

The reduced memory consumption also improves the processing speed by a similar percentage as processing speed is proportional to the amount of data processed.

A search for information elements pertaining to a specific filtering element, e.g. for TV channels pertaining to a specific country, can then be performed by analyzing the markers that refer to the specific filtering element.

In an exemplary TV channel management for example, five channels can be present. For the sake of clarity in this example they will be named ChannelOne, ChannelTwo and so forth. ChannelOne is associated with France and Canada. ChannelTwo is associated with UK and Ireland. ChannelThree is associated with Germany and Austria. ChannelFour is associated with Ukraine and Russia. And finally ChannelFive is associated with Turkey. The relevant countries can therefore e.g. be Austria, Canada, France, Germany, Ireland, Russia, Turkey, UK and Ukraine. Thus Austria has an index (or rank) of zero, Canada an index of one, France an index of two, Germany an index of three, Ireland an index of four, Russia an index of five, Turkey an index of six, UK an index of seven, Ukraine an index of eight. There are nine countries hence only nine markers or an array with nine markers per TV channel will be used.

For ChannelOne markers one and two will be set and others will not be set as the marker positions one and two correspond to Canada and France in the country list. For ChannelTwo only the markers at locations four and seven will be set as those represent Ireland and UK. For ChannelThree marker positions zero and three will be set. For Channel Four marker positions five and eight will be set. ChannelFive will have a single marker set and that will be at position six for Turkey.

Further embodiments of the present invention are subject of the further subclaims and of the following description, referring to the drawings.

In an embodiment, the information filtering method can comprise sorting the filtering elements of the subset according to a predefined sorting criteria, wherein the markers can be provided in the same order as the ordered filtering elements of the subset. The ranks of the markers resulting from the sort will then indicate the position that will represent the respective member of the subset.

In an embodiment, the predefined sorting criteria can define an alphabetical sorting or a length-based sorting or a sorting according to the number of information elements pertaining to each filtering element. For examples, the filtering elements can be countries and can be sorted alphabetically. Further, the filtering elements can be sorted such that the filtering elements with the most information elements pertaining to them are positioned first.

In an embodiment, the predefined sorting criteria can define a sorting according to the number of information elements pertaining to each filter, where markers that represent one of the filtering elements with no information elements pertaining to them can be removed. The filtering elements and the markers can be sorted according to the number of information elements pertaining to each filtering element. This means that e.g. in arrays containing the filtering elements and the markers, the filtering elements with no information elements and the corresponding markers will be placed at the end. To further reduce the memory consumption those filtering elements and markers can then be removed from the respective arrays.

In an embodiment, the markers can be provided as single bits in a digital memory, and a positive bit value of a marker can represent the respective information element pertaining to the respective filtering element. The markers can be provided with a positive or a negative logic. That means that a bit value of "0" or a bit value of "1" can represent the respective information element pertaining to the respective filtering element.

With the present invention for example only two 32 bit double words are enough to contain any 64 country associations of a TV channel, which is more than enough in a real world application, compared to six 32 bit words when storing a full 192 country list. When in the present description a TV channel or TV set or TV receiver is mentioned also radio or networked streaming receivers, in fact any audio or video device capable of receiving and reproducing a signal is comprised.

In an embodiment, selecting a subset can comprise automatically selecting a subset based on a location of a TV set or a TV receiver in which the information filtering method is performed. TV sets or receivers, especially hotel TV sets or receivers usually comprise a data communication interface, e.g. for monitoring and charging guests for the use of pay TV channels.

The TV set or receiver can e.g. detect via such a data communication interface its position and perform a respective channel selection. For example a server can be provided in the hotel that is accessed by the TV set or receiver to retrieve the location information. If for example the TV set or receiver is located in a European country all European countries can e.g. be automatically selected.

In an embodiment, selecting a subset can comprise automatically retrieving a subset and the respective markers from a data server. As already explained above, TV sets or receivers, especially hotel TV sets or receivers usually comprise a data communication interface, e.g. for monitoring and charging guests for the use of pay TV channels. This data communication interface allows the TV set or receiver, i.e. the controller contained in the TV set of receiver, to communicate with other data sources. Therefore, a hotel or even a TV set or receiver vendor can set up a data server, which is accessed by the TV set or receiver. Such a data server can e.g. provide a predefined list of filtering elements, e.g. countries, and information elements, e.g. TV channels, together with the corresponding markers.

This allows e.g. setting up a large number of TV sets or receivers without manually initializing every single TV set. Further, an entity like e.g. a hotel can provide a local server address on the data server. The TV sets can then retrieve the local server address automatically from the data server and then retrieve the required information from the local server.

In an embodiment, the information filtering method can comprise adding to the select subset predetermined standard filtering elements if they are not included in the selected subset. In TV sets or receivers, especially in hotels but also for domestic use, certain countries can e.g. be predefined as standard filtering elements that should always be included in the subset. For example for Hotel TV sets the countries USA, China, Russia may be preselected as such standard filtering elements. It is understood, that this list is just exemplary and any other countries could be selected.

In an embodiment, the information elements can represent TV channels and/or radio channels, and the filtering elements can represent countries and/or topics and/or genres and/or epochs.

As already indicated above, the present invention can especially be applied to TV sets and/or radio receivers. In such TV sets or radio receivers the available channels can be grouped either by countries, by topics or genres like e.g. "action", "romance", "series", "classical", "rock" and the like or by epochs like e.g. "70s", "80s", "90s", "baroque" or the like.

It is understood, that the method according to the present invention can e.g. be executed by any type of controller or processor or computing system. For example an embedded system can be provided, which executes the method according to the present invention in a TV or radio receiver.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a flow diagram of an embodiment of a method according to the present invention;
Fig. 2 shows a flow diagram of another embodiment of a method according to the present invention;
Fig. 3 shows a block diagram of an embodiment of a control device according to the present invention; and
Fig. 4 shows a block diagram of another embodiment of a control device according to the present invention.

In the figures like reference signs denote like elements unless stated otherwise.

### DETAILED DESCRIPTION OF THE DRAWINGS

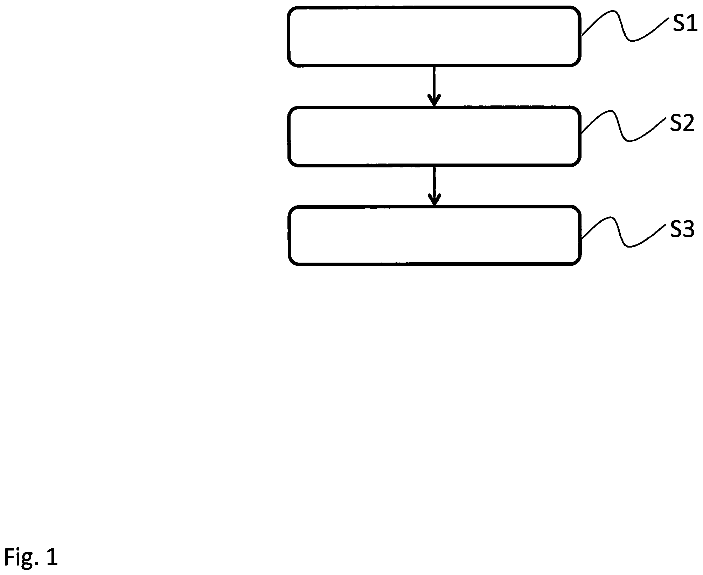

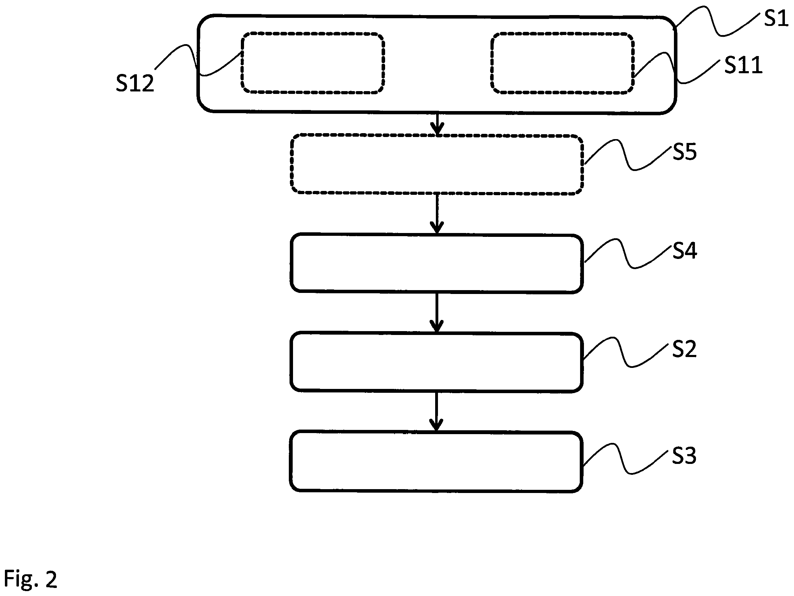

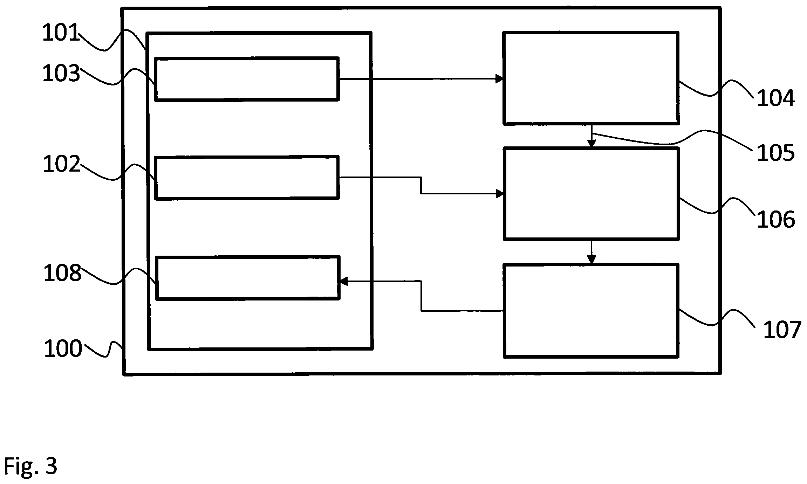

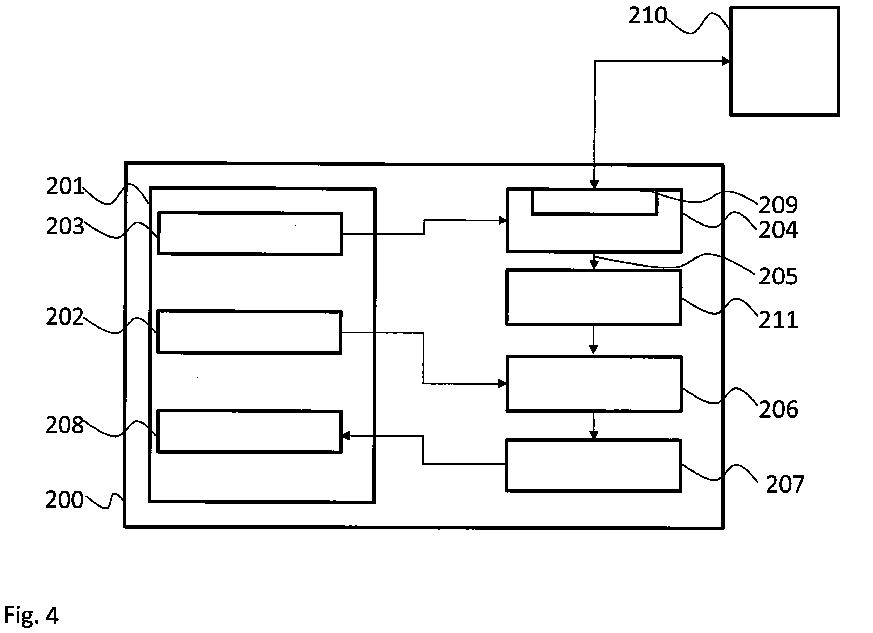

For sake of clarity the reference signs used in device Figures 3 and 4 will also be used in the description of the method Figures 1 and 2.

Fig. 1 shows a flow diagram of an embodiment of an information filtering method for filtering information elements 102, 202 based on a finite set of filtering elements 103, 203.

The method comprises selecting S1 a subset 105, 205 of filtering elements from the finite set of filtering elements 103, 203.

Selecting S1 can e.g. comprise selecting countries and/or topics and/or genres and/or epochs with regard to the information elements 102, 202. The filtering elements 103, 203 therefore refer to these countries and/or topics and/or genres and/or epochs. The information elements 102, 202 can e.g. refer to TV channels, radio channels/stations, movies, series or the like. The information elements 102, 202 can therefore be references or pointers to the TV channels, radio channels/stations, movies, series or the like.

For example TV stations can be specific to certain countries or genres or epochs. The same applies to radio stations. The step of selecting S1 serves to reduce the amount of filtering elements, e.g. countries, genres or epochs. Therefore, instead of working with the complete set of possible countries, genres or epochs, the present invention allows working with a reduced set, e.g. the subset 105, 205, of relevant countries, genres or epochs.

In a second step, each one of the information elements 102, 202 is assigned S2 to at least one of the filtering elements 103, 203 of the subset 105, 205. This second step refers to referencing e.g. the respective TV or radio channel to the respective countries, genres or epochs. It is understood, that a single channel can e.g. be referenced to more than one single country, genre or epoch.

Finally, one marker 108, 208 is provided S3 per information element 102, 202 of the subset 105, 205 for every information element 102, 202, wherein the markers 108, 208 provide information about whether the respective information element 102, 202 pertains to the respective filtering element 103, 203 of the subset.

The markers 108, 208 can e.g. be provided as single bits in a digital memory. A positive bit value (either in positive or negative logic) of a marker 108, 208 represents the respective information element 102, 202 pertaining to the respective filtering element 103, 203.

Fig. 2 shows a flow diagram of another embodiment of the information filtering method of the present invention. The method of Fig. 2 is based on the method of Fig. 1 and provides additional steps.

Selecting S1 a subset 105, 205 for example can comprise automatically selecting S11 a subset 105, 205 based on a location of a TV set or a TV receiver in which the information filtering method is performed. In addition or as an alternative selecting S1 a subset 105, 205 can comprise automatically retrieving S12 a subset 105, 205 and the respective markers 108, 208 from a data server 210.

The above provides for an automatic selection of the relevant filtering elements 103, 203 based on the location of the TV/radio set or TV/radio receiver.

The method in Fig. 2 further comprises adding S5 to the selected subset 105, 205 predetermined standard filtering elements 103, 203 if they are not included in the selected subset 105, 205. This allows providing a standard selection independently of the results of step S1. As can be seen the steps S11, S12 and S5 are drawn with dashed lines and therefore refer to optional steps. It is understood, that these steps can also be performed with the method according to Fig. 1.

The method further comprises sorting S4 the filtering elements 103, 203 of the subset 105, 205 according to a predefined sorting criteria. The predefined sorting criteria can e.g. define an alphabetical sorting or a length-based sorting or a sorting according to the number of information elements 102, 202 pertaining to each filtering element 103, 203.

The markers 108, 208 can then be provided in the same order as the ordered filtering elements 103, 203 of the subset 105, 205.

When the predefined sorting criteria defines a sorting according to the number of information elements 102, 202 pertaining to each filtering element 103, 203, markers 108, 208 representing one of the filtering elements 103, 203 with no information elements 102, 202 pertaining to them can be removed.

Fig. 3 shows a block diagram of an embodiment of a control device 100 for filtering information elements 102 based on a finite set of filtering elements 103.

The control device 100 comprises a memory 101 that stores the information elements 102, the filtering elements 103 and the markers 108. The control device 100 further comprises a selection unit 104 coupled to the memory 101 for reading the filtering elements 103, an assignment unit 106 coupled to the memory 101 and the selection unit 104 and a marking unit 107 coupled to the memory 101 and the assignment unit 106.

The information elements 102 can e.g. represent TV channels and/or radio channels. The filtering elements 103 can represent countries and/or topics and/or genres and/or epochs.

The selection unit 104 selects a subset 105 of filtering elements 103 from the finite set of filtering elements 103. The selection can e.g. be performed based on a user input. Alternate selections will be explained in conjunction with Fig. 4.

The selection unit 104 can e.g. add to the selected subset 105 predetermined standard filtering elements 103 if they are not included in the selected subset 105. The assignment unit 106 will then assign each one of the information elements 102 to at least one of the filtering elements 103 of the subset 105.

Finally, the marking unit 107 provides one marker 108 per information element 102 of the subset 105 for every information element 102 and stores the markers 108 in the memory 101. The markers 108 provide information about whether the respective information element 102 pertains to the respective filtering element 103.

To filter the information elements 102 only the markers for the subset 105 have to be analyzed instead of markers for the complete original finite set of filtering elements.

The markers 108 can e.g. be provided as single bits in memory 101, wherein a positive bit value (in positive or negative logic) of a marker 108 represents the respective information element 102 pertaining to the respective filtering element 103.

Fig. 4 shows a block diagram of another control device 200. The control device 200 is based on the control device 100 and comprises further elements. It is understood that the explanations regarding the control device 100 also apply to control device 200.

In the control device 200 the selection unit 204 can e.g. automatically select a subset 205 based on a location of a TV/radio set or a TV/radio receiver in which control device 200 is provided. Further, the selection unit 204 comprises a communication interface 209 and can automatically retrieve a subset 205 and/or the respective markers 208 from a data server 210. The selection unit 204 can e.g. also use the communication interface 209 to detect its location, e.g. via data server 210, IP geolocation or the like.

The control device 200 further comprises a sorting unit 211, which sorts the filtering elements 103 of the subset 105 according to a predefined sorting criteria. The marking unit 207 can then provide the markers 208 in the same order as the ordered filtering elements 203 of the subset 205.

The predefined sorting criteria can e.g. define an alphabetical sorting or a length-based sorting or a sorting according to the number of information elements 202 pertaining to each filter. Further, the predefined sorting criteria can define a sorting according to the number of information elements 202 pertaining to each filter. The selection unit 204 and/or the sorting unit 211 can then remove markers 208 representing one of the filtering elements 203 with no information elements 202.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

Generally, this application is intended to cover any adaptations or variations of the specific embodiments discussed herein.

The present invention provides an information filtering method for filtering information elements (102, 202) based on a finite set of filtering elements (103, 203), the method comprising selecting (S1) a subset (105, 205) of filtering elements from the finite set of filtering elements (103, 203), assigning (S2) each one of the information elements (102, 202) to at least one of the filtering elements of the subset (105, 205), and providing (S3) one marker (108, 208) per information element (102, 202) of the subset (105, 205) for every information element (102, 202), wherein the markers (108, 208) provide information about whether the respective information element (102, 202) pertains to the respective filtering element (103, 203) of the subset.

### List of reference signs

- 100, 200: control device
- 101, 201: memory
- 102, 202: information elements
- 103, 203: filtering elements
- 104, 204: selection unit
- 105, 205: subset
- 106, 206: assignment unit
- 107, 207: marking unit
- 108, 208: markers
- 209: communication interface
- 210: data server
- 211: sorting unit

- S1 - S5: method steps

## Claims

1. Information filtering method for filtering information elements (102, 202) based on a finite set of filtering elements (103, 203), the method comprising:
selecting (S1) a subset (105, 205) of filtering elements from the finite set of filtering elements (103, 203),
assigning (S2) each one of the information elements (102, 202) to at least one of the filtering elements of the subset (105, 205), and
providing (S3) one marker (108, 208) per filtering element (102, 202) of the subset (105, 205) for every information element (102, 202), wherein the markers (108, 208) provide information about whether the respective information element (102, 202) pertains to the respective filtering element (103, 203) of the subset,
sorting (S4) the filtering elements (103, 203) of the subset (105, 205) according to a predefined sorting criteria,
wherein the markers (108, 208) are provided in the same order as the ordered filtering elements (103, 203) of the subset (105, 205),
wherein the predefined sorting criteria defines a sorting according to the number of information elements (102, 202) pertaining to each filtering element (103, 203), and
wherein markers (108, 208) representing one of the filtering elements (103, 203) with no information elements (102, 202) pertaining to them are removed; and
wherein the markers (108, 208) are provided as single bits in a digital memory, and wherein a positive bit value of a marker (108, 208) represents the respective information element (102, 202) pertaining to the respective filtering element (103, 203).

2. Information filtering method according to claim 1, wherein selecting (S1) a subset (105, 205) comprises automatically selecting (S11) a subset (105, 205) based on a location of a device, in which the information filtering method is performed, especially in a TV set or a radio receiver.

3. Information filtering method according to claim 1, wherein selecting (S1) a subset (105, 205) comprises automatically retrieving (S12) a subset (105, 205) and the respective markers (108, 208) from a data server.

4. Information filtering method according to any one of the preceding claims, comprising adding (S5) to the selected subset (105, 205) predetermined standard filtering elements (103, 203) if they are not included in the selected subset (105, 205).

5. Information filtering method according to any one of the preceding claims, wherein the information elements (102, 202) represent TV channels and/or radio channels,
and wherein the filtering elements (103, 203) represent countries and/or topics and/or genres and/or epochs.

6. Control device (100, 200) for filtering information elements (102, 202) based on a finite set of filtering elements (103, 203), the control device (100, 200) comprising:
a selection unit (104, 204) configured to select a subset (105, 205) of filtering elements (103, 203) from the finite set of filtering elements (103, 203),
an assignment unit (106, 206) configured to assign each one of the information elements (102, 202) to at least one of the filtering elements (103, 203) of the subset (105, 205),
a marking unit (107, 207) configured to provide one marker (108, 208) per filtering element (102, 202) of the subset (105, 205) for every information element (102, 202), wherein the markers (108, 208) provide information about whether the respective information element (102, 202) pertains to the respective filtering element (103, 203), and
a sorting unit (211) configured to sort the filtering elements (103, 203) of the subset (105, 205) according to a predefined sorting criteria, wherein the marking unit (107, 207) is configured to provide the markers (108, 208) in the same order as the ordered filtering elements (103, 203) of the subset (105, 205),
wherein the predefined sorting criteria defines a sorting according to the number of information elements (102, 202) pertaining to each filter, and wherein the selection unit (104, 204) and/or the sorting unit (211) is configured to remove markers (108, 208) representing one of the filtering elements (103, 203) with no information elements (102, 202);
wherein the markers (108, 208) are provided as single bits in a digital memory, and wherein a positive bit value of a marker (108, 208) represents the respective information element (102, 202) pertaining to the respective filtering element (103, 203).

7. Control device (100, 200) according to claim 6, wherein the selection unit (104, 204) is configured to automatically select a subset (105, 205) based on a location of a device, in which the information filtering method is performed; and/or
wherein the selection unit (104, 204) comprises a communication interface (209) and is configured to automatically retrieve a subset (105, 205) and the respective markers (108, 208) from a data server (210).

8. Control device (100, 200) according to any one of the preceding claims 6 to 7, wherein the selection unit (104, 204) is configured to add to the selected subset (105, 205) predetermined standard filtering elements (103, 203) if they are not included in the selected subset (105, 205); and/or
wherein the information elements (102, 202) represent TV channels and/or radio channels, and the filtering elements (103, 203) represent countries and/or topics and/or genres and/or epochs.

## Patentansprüche

1. Verfahren zur Informationsfilterung zum Filtern von Informationselementen (102, 202) basierend auf einer endlichen Menge von Filterelementen (103, 203), wobei das Verfahren aufweist:
Auswählen (S1) einer Teilmenge (105, 205) von Filterelementen aus der endlichen Menge von Filterelementen (103, 203),
Zuordnen (S2) jedes der Informationselemente (102, 202) zu mindestens einem der Filterelemente der Teilmenge (105, 205), und
Bereitstellen (S3) eines Markers (108, 208) pro Filterelement (102, 202) der Teilmenge (105, 205) für jedes Informationselement (102, 202), wobei die Marker (108, 208) Informationen darüber bereitstellen, ob das jeweilige Informationselement (102, 202) zu dem jeweiligen Filterelement (103, 203) der Teilmenge gehört,
Sortieren (S4) der Filterelemente (103, 203) der Teilmenge (105, 205) gemäß einem vordefinierten Sortierkriterium,
wobei die Markierungen (108, 208) in der gleichen Reihenfolge bereitgestellt werden wie die geordneten Filterelemente (103, 203) der Teilmenge (105, 205),
wobei die vordefinierten Sortierkriterien eine Sortierung gemäß der Anzahl von Informationselementen (102, 202) definieren, die zu jedem Filterelement (103, 203) gehören, und
wobei Markierungen (108, 208), die eines der Filterelemente (103, 203) repräsentieren, zu dem keine Informationselemente (102, 202) gehören, entfernt werden; und
wobei die Marker (108, 208) als einzelne Bits in einem digitalen Speicher bereitgestellt werden, und wobei ein positiver Bitwert eines Markers (108, 208) das jeweilige Informationselement (102, 202) repräsentiert, das zu dem jeweiligen Filterelement (103, 203) gehört.

2. Verfahren zur Informationsfilterung gemäß Anspruch 1, wobei das Auswählen (S1) einer Teilmenge (105, 205) ein automatisches Auswählen (S11) einer Teilmenge (105, 205) basierend auf einem Ort einer Vorrichtung aufweist, in der das Verfahren zur Informationsfilterung durchgeführt wird, insbesondere in einem Fernsehgerät oder einem Rundfunkempfänger.

3. Verfahren zur Informationsfilterung gemäß Anspruch 1, wobei das Auswählen (S1) einer Teilmenge (105, 205) ein automatisches Abrufen (S12) einer Teilmenge (105, 205) und der jeweiligen Marker (108, 208) von einem Datenserver aufweist.

4. Verfahren zur Informationsfilterung gemäß einem der vorhergehenden Ansprüche, das das Hinzufügen (S5) von vorbestimmten Standard-Filterelementen (103, 203) zu der ausgewählten Teilmenge (105, 205) aufweist, wenn sie nicht in der ausgewählten Teilmenge (105, 205) enthalten sind.

5. Verfahren zur Informationsfilterung gemäß einem der vorhergehenden Ansprüche, wobei die Informationselemente (102, 202) Fernsehkanäle und/oder Radiokanäle repräsentieren,
und wobei die Filterelemente (103, 203) Länder und/oder Themen und/oder Genres und/oder Epochen repräsentieren.

6. Steuervorrichtung (100, 200) zum Filtern von Informationselementen (102, 202) basierend auf einer endlichen Menge von Filterelementen (103, 203), wobei die Steuervorrichtung (100, 200) aufweist:
eine Auswahleinheit (104, 204), die konfiguriert ist, um eine Teilmenge (105, 205) von Filterelementen (103, 203) aus der endlichen Menge von Filterelementen (103, 203) auszuwählen,
eine Zuweisungseinheit (106, 206), die so konfiguriert ist, dass sie jedes der Informationselemente (102, 202) mindestens einem der Filterelemente (103, 203) der Teilmenge (105, 205) zuweist,
eine Markierungseinheit (107, 207), die konfiguriert ist, um für jedes Informationselement (102, 202) eine Markierung (108, 208) pro Filterelement (102, 202) der Teilmenge (105, 205) bereitzustellen, wobei die Markierungen (108, 208) Informationen darüber bereitstellen, ob das jeweilige Informationselement (102, 202) zu dem jeweiligen Filterelement (103, 203) gehört, und
eine Sortiereinheit (211), die so konfiguriert ist, dass sie die Filterelemente (103, 203) der Teilmenge (105, 205) gemäß einem vordefinierten Sortierkriterium bereitstellt, wobei die Markierungseinheit (107, 207) so konfiguriert ist, dass sie die Markierungen (108, 208) in der gleichen Reihenfolge bereitstellt wie die geordneten Filterelemente (103, 203) der Teilmenge (105, 205),
wobei die vordefinierten Sortierkriterien eine Sortierung gemäß der Anzahl von Informationselementen (102, 202) definieren, die zu jedem Filter gehören, und wobei die Auswahleinheit (104, 204) und/oder die Sortiereinheit (211) konfiguriert ist, um Markierungen (108, 208) zu entfernen, die eines der Filterelemente (103, 203) mit keinen Informationselementen (102, 202) repräsentieren;
wobei die Marker (108, 208) als einzelne Bits in einem digitalen Speicher bereitgestellt werden, und wobei ein positiver Bitwert eines Markers (108, 208) das jeweilige Informationselement (102, 202) repräsentiert, das zu dem jeweiligen Filterelement (103, 203) gehört.

7. Steuervorrichtung (100, 200) gemäß Anspruch 6, wobei die Auswahleinheit (104, 204) konfiguriert ist, um automatisch eine Teilmenge (105, 205) basierend auf einem Ort einer Vorrichtung auszuwählen, in der das Informationsfilterverfahren durchgeführt wird; und/oder wobei die Auswahleinheit (104, 204) eine Kommunikationsschnittstelle (209) aufweist und so konfiguriert ist, dass sie automatisch eine Teilmenge (105, 205) und die jeweiligen Marker (108, 208) von einem Datenserver (210) abruft.

8. Steuervorrichtung (100, 200) gemäß einem der vorhergehenden Ansprüche 6 bis 7, wobei die Auswahleinheit (104, 204) konfiguriert ist, der ausgewählten Teilmenge (105, 205) vorbestimmte Standard-Filterelemente (103, 203) hinzuzufügen, wenn sie nicht in der ausgewählten Teilmenge (105, 205) enthalten sind; und/oder
wobei die Informationselemente (102, 202) Fernsehkanäle und/oder Radiokanäle repräsentieren, und die Filterelemente (103, 203) Länder und/oder Themen und/oder Genres und/oder Epochen repräsentieren.

## Revendications

1. Méthode de filtrage de l'information pour filtrer des éléments d'information (102, 202) basés sur un ensemble fini d'éléments de filtrage (103, 203), la méthode comprenant :
la sélection (S1) d'un sous-ensemble (105, 205) d'éléments de filtrage à partir de l'ensemble fini d'éléments de filtrage (103, 203),
l'affectation (S2) de chacun des éléments d'information (102, 202) à au moins un des éléments de filtrage du sous-ensemble (105, 205), et
fournir (S3) un marqueur (108, 208) par élément de filtrage (102, 202) du sous-ensemble (105, 205) pour chaque élément d'information (102, 202), dans lequel les marqueurs (108, 208) fournissent des informations sur le fait que l'élément d'information respectif (102, 202) se rapporte à l'élément de filtrage respectif (103, 203) du sous-ensemble,
en triant (S4) les éléments filtrants (103, 203) du sous-ensemble (105, 205) selon un critère de tri prédéfini,
où les marqueurs (108, 208) sont fournis dans le même ordre que les éléments filtrants ordonnés (103, 203) du sous-ensemble (105, 205),
dans lequel les critères de tri prédéfinis définissent un tri en fonction du nombre d'éléments d'information (102, 202) se rapportant à chaque élément de filtrage (103, 203), et
dans lequel les marqueurs (108, 208) représentant un des éléments de filtrage (103, 203) sans éléments d'information (102, 202) les concernant sont supprimés
dans lequel les marqueurs (108, 208) sont fournis sous forme de bits uniques dans une mémoire numérique, et dans lequel une valeur binaire positive d'un marqueur (108, 208) représente l'élément d'information respectif (102, 202) appartenant à l'élément de filtrage respectif (103, 203).

2. Méthode de filtrage de l'information selon la revendication 1, dans laquelle la sélection (S1) d'un sous-ensemble (105, 205) comprend la sélection automatique (S11) d'un sous-ensemble (105, 205) sur la base d'un emplacement d'un dispositif, dans lequel la méthode de filtrage de l'information est effectuée, en particulier dans un poste de télévision ou un récepteur radio.

3. Méthode de filtrage de l'information selon la revendication 1, dans laquelle la sélection (S1) d'un sous-ensemble (105, 205) comprend la récupération automatique (S12) d'un sous-ensemble (105, 205) et des marqueurs respectifs (108, 208) à partir d'un serveur de données.

4. Méthode de filtrage des informations selon l'une quelconque des revendications précédentes, comprenant l'ajout (S5) au sous-ensemble sélectionné (105, 205) d'éléments de filtrage standard prédéterminés (103, 203) s'ils ne sont pas inclus dans le sous-ensemble sélectionné (105, 205).

5. Méthode de filtrage des informations selon l'une quelconque des revendications précédentes, dans laquelle les éléments d'information (102, 202) représentent des chaînes de télévision et/ou des chaînes de radio,
et où les éléments de filtrage (103, 203) représentent des pays et/ou des sujets et/ou des genres et/ou des époques.

6. Dispositif de contrôle (100, 200) pour le filtrage d'éléments d'information (102, 202) basé sur un ensemble fini d'éléments de filtrage (103, 203), le dispositif de contrôle (100, 200) comprenant :
une unité de sélection (104, 204) configurée pour sélectionner un sous-ensemble (105, 205) d'éléments filtrants (103, 203) à partir de l'ensemble fini d'éléments filtrants (103, 203),
une unité d'affectation (106, 206) configurée pour affecter chacun des éléments d'information (102, 202) à au moins un des éléments de filtrage (103, 203) du sous-ensemble (105, 205),
une unité de marquage (107, 207) configurée pour fournir un marqueur (108, 208) par élément de filtrage (102, 202) du sous-ensemble (105, 205) pour chaque élément d'information (102, 202), dans laquelle les marqueurs (108, 208) fournissent des informations sur le fait que l'élément d'information (102, 202) respectif se rapporte à l'élément de filtrage (103, 203) respectif, et
une unité de tri (211) configurée pour trier les éléments filtrants (103, 203) du sous-ensemble (105, 205) selon un critère de tri prédéfini, dans laquelle l'unité de marquage (107, 207) est configurée pour fournir les marqueurs (108, 208) dans le même ordre que les éléments filtrants ordonnés (103, 203) du sous-ensemble (105, 205),
dans lequel le critère de tri prédéfini définit un tri en fonction du nombre d'éléments d'information (102, 202) appartenant à chaque filtre, et dans lequel l'unité de sélection (104, 204) et/ou l'unité de tri (211) est configurée pour supprimer les marqueurs (108, 208) représentant un des éléments de filtrage (103, 203) sans éléments d'information (102, 202) ;
dans lequel les marqueurs (108, 208) sont fournis sous forme de bits uniques dans une mémoire numérique, et dans lequel une valeur binaire positive d'un marqueur (108, 208) représente l'élément d'information respectif (102, 202) appartenant à l'élément de filtrage respectif (103, 203).

7. Dispositif de commande (100, 200) selon la revendication 6, dans lequel l'unité de sélection (104, 204) est configurée pour sélectionner automatiquement un sous-ensemble (105, 205) sur la base d'un emplacement d'un dispositif, dans lequel la méthode de filtrage des informations est effectuée ; et/ou
dans lequel l'unité de sélection (104, 204) comprend une interface de communication (209) et est configurée pour récupérer automatiquement un sous-ensemble (105, 205) et les marqueurs respectifs (108, 208) à partir d'un serveur de données (210).

8. Dispositif de commande (100, 200) selon l'une quelconque des revendications 6 à 7 précédentes, dans lequel l'unité de sélection (104, 204) est configurée pour ajouter au sous-ensemble sélectionné (105, 205) des éléments de filtrage standard prédéterminés (103, 203) s'ils ne sont pas inclus dans le sous-ensemble sélectionné (105, 205) ; et/ou
où les éléments d'information (102, 202) représentent des chaînes de télévision et/ou des stations de radio, et les éléments de filtrage (103, 203) représentent des pays et/ou des sujets et/ou des genres et/ou des époques.
